# EUROPEAN PATENT APPLICATION

(11) **EP 4 397 481 A1**
(43) Date of publication of application: **10.07.2024**
(21) Application number: 23218102.4
(22) Date of filing: 19.12.2023
(51) Int. Cl.: B32B 7/12, B60C 1/00, B60C 7/00, B29D 30/02, B32B 15/08, B32B 25/08, B32B 25/12, B32B 25/14, C08L 9/06, B60C 5/14

(54) **LAMINATED PRODUCT AND MANUFACTURING METHOD THEREFOR**

(30) Priority: 06.01.2023 JP 2023001276
(71) Applicant: Sumitomo Rubber Industries, Ltd., Kobe-shi, Hyogo 651-0072 (JP)
(72) Inventor: TAKEDA, Ai, Kobe-shi, Hyogo, 651-0072 (JP)
(74) Representative: Manitz Finsterwald Patent- und Rechtsanwaltspartnerschaft mbB

(57) **Abstract**

Provided is a laminated product in which the joining strength between a metal body and a resin body can be improved. A laminated product 1 includes a metal body 2, a resin body 3, and an adhesion layer 4, the metal body 2 and the resin body 3 being joined together with the adhesion layer 4 therebetween. The laminated product 1 further includes a rubber layer 5 made from a vulcanized rubber and located between the resin body 3 and the adhesion layer 4.

## Description

### BACKGROUND OF THE INVENTION

### Field of the Invention

The present invention relates to a laminated product and a manufacturing method therefor.

### Background Art

Conventionally, laminated products in each of which a metal body and a resin body are joined together with an adhesion layer therebetween have been used for various purposes. In recent years, such laminated products have been used for developing airless tires.

Japanese Laid-Open Patent Publication No. 2016-130071 describes an airless tire. The airless tire includes: a cylindrical tread ring having a ground-contact surface; a hub that is disposed inward of the tread ring in a radial direction and that is to be fixed to an axle; and spokes connecting the tread ring and the hub to each other.

The hub is formed of a metal body. Meanwhile, each of the spokes is formed of a resin body. Therefore, a complex composed of the hub and the spoke corresponds to the above laminated product. The hub and the spoke are joined together with an adhesive therebetween.

In general, a metal body and a resin body have different coefficients of thermal expansion. Thus, if the metal body and the resin body experience thermal shrinkage or the like, a stress is applied to an adhesion layer therebetween. Such a stress is absorbed by the adhesion layer, and thus the joining strength between the metal body and the resin body is maintained. However, further improvement of the joining strength has been desired from the viewpoint of improving the durability of the laminated product.

The present invention has been made in view of the above circumstances, and a main object of the present invention is to provide a laminated product in which the joining strength between a metal body and a resin body can be improved.

### SUMMARY OF THE INVENTION

The present invention is directed to a laminated product including a metal body, a resin body, and an adhesion layer, the metal body and the resin body being joined together with the adhesion layer therebetween, wherein the laminated product further includes a rubber layer made from a vulcanized rubber and located between the resin body and the adhesion layer.

Since the laminated product according to the present invention employs the above configuration, the joining strength between the metal body and the resin body can be improved.

### BRIEF DESCRIPTION OF THE DRAWINGS

FIG. 1 is a partial cross-sectional view of a laminated product according to an embodiment;
FIGS. 2(a) to 2(c) are each a cross-sectional view for explaining a step of disposing an adhesive and an unvulcanized rubber onto a second surface of a metal body;
FIGS. 3(a) and 3(b) are each a cross-sectional view for explaining a step of forming a resin body;
FIG. 4 is a partial front view of an airless tire according to the present embodiment as seen in an axle direction; and
FIG. 5 is a partial enlarged view of the airless tire in FIG. 4.

### DETAILED DESCRIPTION

Hereinafter, an embodiment of the present invention will be described with reference to the drawings. It should be understood that the drawings contain exaggerated expressions and expressions that differ from the dimensional ratio of the actual structure in order to help the understanding of the contents of the present invention. In addition, the same or common elements are denoted by the same reference characters throughout each embodiment, and the redundant description thereof is omitted. Furthermore, the specific configurations shown in the embodiment and the drawings are for understanding the contents of the present invention, and the present invention is not limited to the specific configurations shown.

### [Overall Structure of Laminated Product]

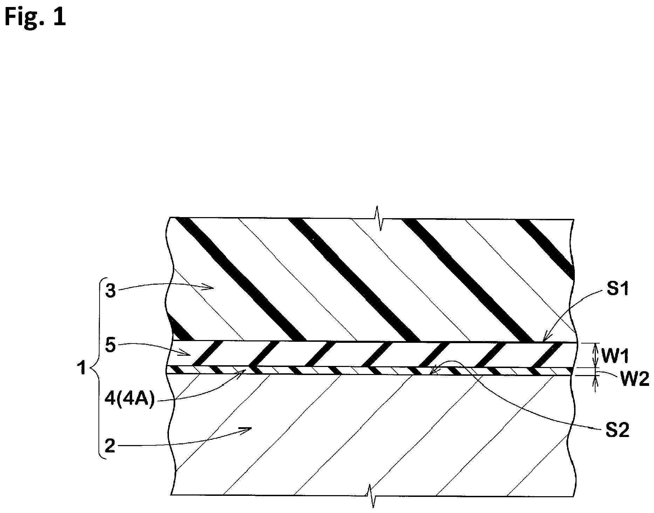

FIG. 1 is a partial cross-sectional view of a laminated product 1 according to the present embodiment. In the laminated product 1 according to the present embodiment, a metal body 2 and a resin body 3 are joined together with an adhesion layer 4 therebetween.

### [Metal Body]

For the metal body 2 in the present embodiment, it is possible to use, for example, an iron-based metal, an aluminum-based metal, a magnesium-based metal, a copper-based metal, a titanium-based metal, or the like. The metal body 2 has a second surface S2 in contact with the adhesion layer 4.

Examples of the iron-based metal include iron, steel, stainless steel, and the like. Examples of the aluminum-based metal include aluminum, aluminum alloys, and the like. Examples of the magnesium-based metal include magnesium alloys and the like. Examples of the copper-based metal include copper, copper alloys, and the like. Examples of the titanium-based metal include titanium, titanium alloys, and the like.

Among the above metals, an aluminum-based metal is used for the metal body 2 in the present embodiment. Such an aluminum-based metal has characteristics of being more lightweight and having a higher processability than the other metals.

### [Resin Body]

The resin body 3 in the present embodiment is made from a polymer material. The polymer material is not particularly limited but is preferably a polymer material that can be molded as a resin or an elastomer through an injecting method or a casting method.

Examples of the resin or the elastomer include polyolefins, polyvinyl chloride, polystyrene, methacrylic resins, polycarbonates, polyamides, polyimides, polyacetal, fluorine resins, urea resins, phenol resins, polyesters, polyurethanes, epoxy resins, melamine resins, silicon resins, and the like.

Among the above polymer materials (the resins or the elastomers), a thermoplastic elastomer is preferably contained in the present embodiment from the viewpoint of moldability, processability, and the degree of freedom in material designing. The thermoplastic elastomer is not particularly limited but is preferably a thermoplastic polyester elastomer, a thermoplastic polyamide elastomer, or a thermoplastic polyurethane elastomer. Among these thermoplastic elastomers, a thermoplastic polyester elastomer resin can be suitably used from the viewpoint of improving durability.

### [Adhesion Layer]

The adhesion layer 4 in the present embodiment is formed as a cured product of an adhesive 4A. The adhesive 4A is not particularly limited as long as the adhesive is used for adhering the metal body 2 and the resin body 3 to each other. As the adhesive 4A in the present embodiment, a commercially available adhesive is used, and the adhesive 4A includes an undercoat adhesive (primer) and an overcoat adhesive. As the undercoat adhesive, it is possible to use, for example, an undercoat adhesive with the product name "Chemlok 205" (manufactured by LORD Corporation) or the like. Meanwhile, as the overcoat adhesive, it is possible to use, for example, an overcoat adhesive with the product name "Chemlok 6125" or the product name "Chemlok 6108" (each of which is manufactured by LORD Corporation) or the like.

The metal body 2 and the resin body 3 have different coefficients of thermal expansion. Therefore, when the metal body 2 and the resin body 3 experience thermal shrinkage or the like, a stress is applied to the adhesion layer 4 therebetween. Such a stress is absorbed by the adhesion layer 4, and thus the joining strength between the metal body 2 and the resin body 3 is maintained. However, further improvement of the joining strength has been desired from the viewpoint of improving the durability of the laminated product 1.

As a result of thorough studies, the present inventors have found that, if a rubber layer 5 made from a vulcanized rubber is provided between the resin body 3 and the adhesion layer 4, the above stress due to thermal shrinkage or the like is absorbed by the rubber layer 5 together with the adhesion layer 4, whereby the joining strength is further improved. On the basis of this finding, the rubber layer 5 is provided between the resin body 3 and the adhesion layer 4 in the laminated product 1 according to the present embodiment.

### [Rubber Layer]

The rubber layer 5 in the present embodiment is made from a vulcanized rubber. The rubber layer 5 has a first surface S1 in contact with the resin body 3. Such a rubber layer 5 functions as an elastically deformable cushioning material and can absorb, together with the adhesion layer 4, a stress applied owing to thermal shrinkage or the like of the metal body 2 and the resin body 3. Therefore, the joining strength between the metal body 2 and the resin body 3 is improved, whereby the durability of the laminated product 1 is improved.

The rubber layer 5 in the present embodiment is elastically deformable to a larger extent than the adhesion layer 4. Considering this, the rubber layer 5 is disposed close to the resin body 3 which experiences a more significant thermal shrinkage than the metal body 2. Consequently, the rubber layer 5 can be elastically deformed so as to follow a significant thermal shrinkage of the resin body 3. Thus, a stress between the metal body 2 and the resin body 3 is effectively absorbed, whereby the joining strength between the metal body 2 and the resin body 3 is improved.

The rubber layer 5 is not particularly limited as long as the rubber layer is made from a vulcanized rubber. The rubber layer 5 preferably contains at least one of natural rubber, butadiene rubber, and styrene-butadiene rubber. If any of the rubbers is contained, the absorption performance for the above stress, the adhesiveness to the resin body 3, the strength, and the durability of the rubber layer 5 are improved. Similar to a conventional vulcanized rubber, the rubber layer 5 may contain, for example, a vulcanizing agent, a vulcanization accelerator, a heat stabilizer, a wax, and the like.

The rubber layer 5 preferably further contains a tackifier. By such a tackifier, the adhesiveness to the resin body 3 is improved, whereby the joining strength between the metal body 2 and the resin body 3 is improved. The tackifier can be selected as appropriate, and, for example, a phenol-based tackifier, a petroleum-based tackifier, or the like can be used.

The first surface S1 of the rubber layer 5 is preferably halogenated. Consequently, the adhesiveness between the rubber layer 5 and the resin body 3 is improved. The halogenation can be performed through an addition reaction of a halogen with respect to the first surface S1 according to the same procedure as a conventionally employed procedure.

In the present embodiment, since the adhesiveness is improved through the above halogenation, the first surface S1 can be directly joined to the resin body 3 with no adhesive layer (not shown) therebetween. Consequently, for example, as compared to a case where an adhesive layer (not shown) is interposed between the resin body 3 and the rubber layer 5, the rubber layer 5 can be elastically deformed so as to directly follow thermal shrinkage of the resin body 3. Thus, a stress between the metal body 2 and the resin body 3 can be effectively absorbed. Further, the rubber layer 5 has a higher heat resistance than the adhesive layer, whereby the joining strength in a high-temperature environment is improved.

The complex elastic modulus E* at 70°C of the rubber layer 5 is preferably set to 3 to 50 MPa. If the complex elastic modulus E* is set to be not higher than 50 MPa, the flexibility of the rubber layer 5 is maintained, and a stress between the metal body 2 and the resin body 3 can be effectively absorbed. Meanwhile, if the complex elastic modulus E* is set to be not lower than 3 MPa, the rigidity and the durability of the rubber layer 5 are maintained. From this viewpoint, the complex elastic modulus E* is preferably not higher than 40 MPa, and meanwhile, preferably not lower than 10 MPa.

The complex elastic modulus E* at 70°C of the rubber layer 5 is a value measured by using a dynamic viscoelasticity measuring device (EPLEXOR series) manufactured by NETZSCH-Gerätebau GmbH, under the following conditions according to the standards of JIS-K6394.
Frequency: 10 Hz
Initial strain: 5%
Amplitude of dynamic strain: ±1%
Deformation mode: tension
Measurement temperature: 70°C

A thickness W1 of the rubber layer 5 is preferably set to 1 to 5 mm. If the thickness W1 is set to be not smaller than 1 mm, the adhesiveness to the resin body 3 can be improved, and furthermore, a stress between the metal body 2 and the resin body 3 can be absorbed. Meanwhile, if the thickness is set to be not larger than 5 mm, a fracture of the rubber layer 5 and imperfection in vulcanization are inhibited. From this viewpoint, the thickness W1 is preferably not smaller than 2 mm, and meanwhile, preferably not larger than 4 mm.

A thickness W2 of the adhesion layer 4 is preferably set to 10 to 50 µm. If the thickness W2 is set to be not smaller than 10 µm, the adhesiveness to the metal body 2 can be improved, and furthermore, a stress between the metal body 2 and the resin body 3 can be absorbed. Meanwhile, if the thickness is set to be not larger than 50 µm, decrease in the cohesive strength of the adhesion layer 4 due to increase in the thickness is suppressed, and the joining strength is maintained. From this viewpoint, the thickness W2 is preferably not smaller than 20 µm, and meanwhile, preferably not larger than 40 µm.

The adhesion layer 4 is preferably formed so as to contain chlorinated rubber or chlorosulfonated polyethylene as a main component. Such an adhesion layer 4 leads to improvement of the adhesiveness to the metal body 2 and the absorption performance for a stress due to thermal shrinkage or the like of the metal body 2 and the resin body 3. For forming the adhesion layer 4 containing either of the above components as a main component, for example, the above adhesive is used.

The tensile shear strength at 23°C between the metal body 2 and the resin body 3 is preferably set to be not lower than 1.0 MPa. If the tensile shear strength at 23°C is set to be not lower than 1.0 MPa, a cohesive fracture of the adhesion layer 4 in a normal-temperature environment is inhibited. From this viewpoint, the tensile shear strength at 23°C is preferably set to be not lower than 3.0 MPa.

The tensile shear strength is measured in accordance with "Determination of tensile lap-shear strength of rigid-to-rigid bonded assemblies" of JIS K 6850. Specifically, the metal body 2 and the resin body 3 are positionally shifted along an adhesion surface so as to apply tensile shear stresses to the adhesion layer 4 and the rubber layer 5, and a fracture stress at which the adhesion layer 4 and the rubber layer 5 have been fractured owing to the tensile shear stresses is measured as the tensile shear strength. The tensile shear strength can be set as appropriate by adjusting the hardness and the thickness W2 of the adhesion layer 4 and the complex elastic modulus and the thickness W1 of the rubber layer 5.

A recess-projection portion (not shown) is preferably formed onto the second surface S2 of the metal body 2. Such a recess-projection portion leads to exhibition of the anchor effect with respect to the adhesion layer 4 and increase of the adhesion strength between the metal body 2 and the adhesion layer 4.

The recess-projection portion (not shown) can be formed through, for example, a known base treatment by means of laser machining, shot blasting, or the like. In the present embodiment, laser machining which enables a recess-projection portion having an arbitrarily-set roughness to be formed with high accuracy is employed.

### [Manufacturing Method for Laminated Product]

Next, a manufacturing method for the laminated product 1 according to the present embodiment (hereinafter, sometimes referred to as "manufacturing method") will be described.

### [Disposition of Adhesive and Unvulcanized Rubber]

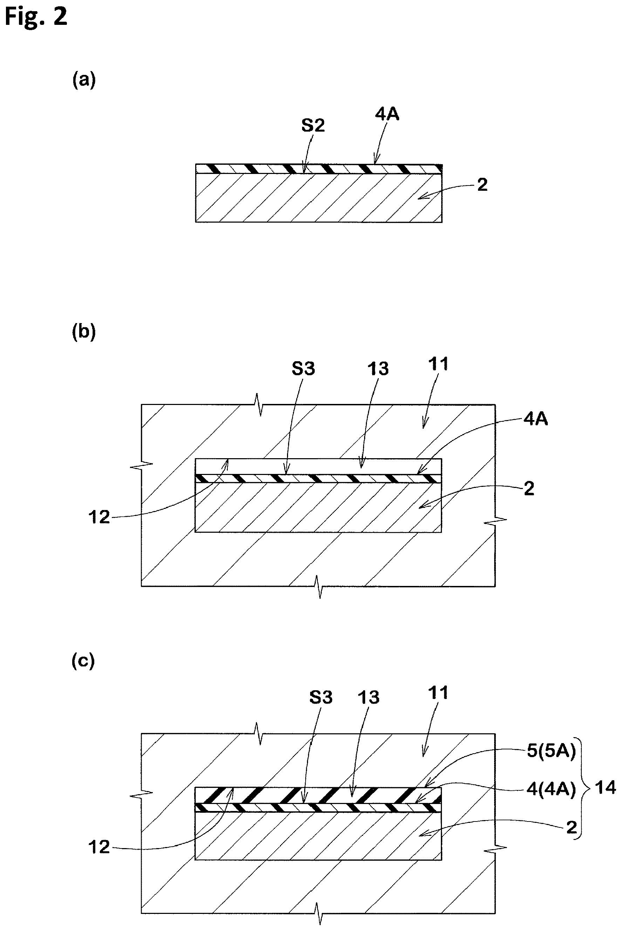

In the manufacturing method according to the present embodiment, a step of disposing, onto the second surface S2 which is a surface of the metal body 2 and which is to be in contact with the adhesion layer 4, the adhesive 4A for forming the adhesion layer 4 and an unvulcanized rubber for forming the rubber layer 5 is performed first. FIGS. 2(a) to 2(c) are each a cross-sectional view for explaining the step of disposing the adhesive 4A and an unvulcanized rubber 5A onto the second surface S2 of the metal body 2.

In this step of the present embodiment, the adhesive 4A for forming the adhesion layer 4 is applied onto the second surface S2 of the metal body 2 first as shown in FIG. 2(a). In a case where the undercoat adhesive (primer) and the overcoat adhesive are included as in the present embodiment, the undercoat adhesive is applied onto the second surface S2, and then, the overcoat adhesive is applied onto the undercoat adhesive. In the present embodiment, the adhesive 4A is applied such that the thickness W2 (shown in FIG. 1) of the adhesion layer 4 falls within the above range.

A step of preheating the adhesive 4A applied onto the second surface S2 may be performed in order to improve the adhesive force of the adhesive 4A. For preheating the adhesive, a warmer (not shown) may be used, for example. The temperature of the adhesive 4A is desirably set to, for example, 30 to 120°C. The preheating time is desirably set to, for example, 10 to 30 minutes.

In a case where the recess-projection portion (not shown) is formed onto the second surface S2 of the metal body 2, a step of forming the recess-projection portion onto the second surface S2 is preferably performed prior to the step of applying the adhesive 4A. The recess-projection portion is formed according to the above procedure.

Next, a step of disposing, into a cavity 12 of a mold 11, the metal body 2 (shown in FIG. 2(a)) onto which the adhesive 4A has been applied is performed as shown in FIG. 2(b). In the cavity 12 into which the metal body 2 has been set, an empty space 13 remains such that the unvulcanized rubber 5A shown in FIG. 2(c) can be supplied. A third surface S3, of the adhesive 4A, which is to be in contact with the unvulcanized rubber 5A is positioned so as to face the empty space 13 of the cavity 12.

Next, in this step of the present embodiment, the unvulcanized rubber 5A is disposed onto the third surface S3 of the adhesive 4A as shown in FIG. 2(c). In the present embodiment, the empty space 13 is filled with the unvulcanized rubber 5A such that the thickness W1 (shown in FIG. 1) of the rubber layer 5 falls within the above range.

### [Vulcanization of Unvulcanized Rubber to Form Rubber Layer]

Next, in the manufacturing method according to the present embodiment, a step of vulcanizing the unvulcanized rubber 5A to form the rubber layer 5 is performed. In the present embodiment, the mold 11 in which the metal body 2, the adhesive 4A, and the unvulcanized rubber 5A have been disposed is heated. Consequently, the unvulcanized rubber 5A is vulcanized to be formed as the rubber layer 5. Further, the adhesive 4A is cured to be formed as the adhesion layer 4. Consequently, an integral body 14 composed of the metal body 2, the adhesion layer 4, and the rubber layer 5 is formed. The vulcanization temperature and the vulcanization time are set as appropriate according to the formula of the unvulcanized rubber 5A or the like. The vulcanization temperature is set to, for example, 150 to 190°C. The vulcanization time is set to 10 to 25 minutes. The pressure is set to 0.5 to 10 MPa. The integral body 14 is taken out from the mold 11.

### [Curing of Resin in Liquid Form]

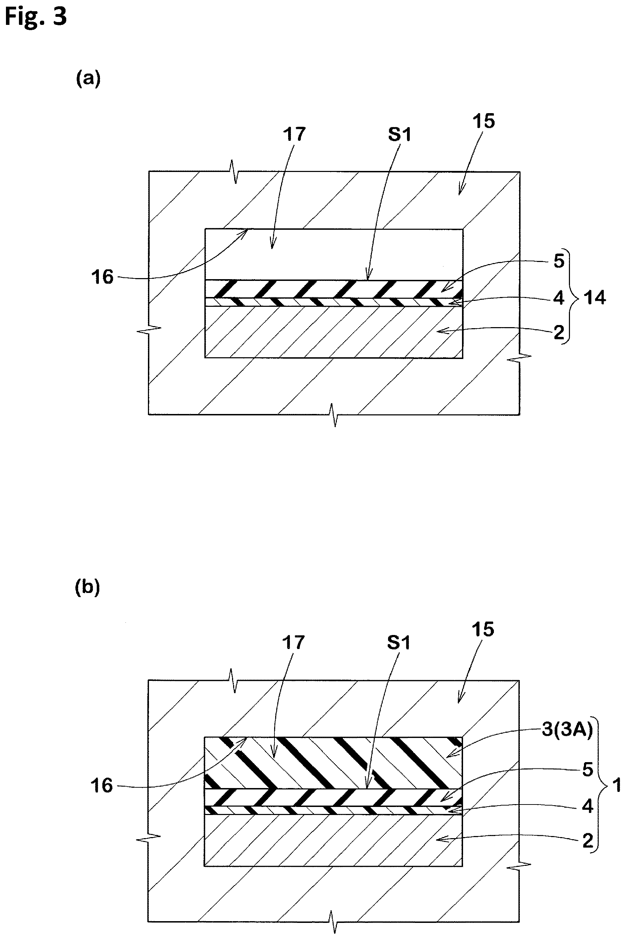

Next, in the manufacturing method according to the present embodiment, a step of bringing a resin in liquid form into contact with the rubber layer 5 and curing the resin to form the resin body is performed. FIGS. 3(a) and 3(b) are each a cross-sectional view for explaining the step of forming the resin body 3.

In the present embodiment, the integral body 14 composed of the metal body 2, the adhesion layer 4, and the rubber layer 5 is disposed into a cavity 16 of a mold 15 first as shown in FIG. 3(a). In the cavity 16 into which the integral body 14 has been set, an empty space 17 remains such that a resin 3A in liquid form shown in FIG. 3(b) can be supplied. The first surface S1, of the rubber layer 5, which is to be in contact with the resin 3A in liquid form is positioned so as to face the empty space 17 of the cavity 16.

Next, in the present embodiment, the temperature of the resin 3A is adjusted (to, for example, 180 to 300°C) in a cylinder (not shown) of a known injection molding machine. Consequently, the resin 3A is melted into liquid form.

Next, the resin 3A in liquid form is supplied (injected) from the cylinder (not shown) of the injection molding machine into the empty space 17 of the cavity 16. Consequently, the resin 3A in liquid form is brought into contact with the first surface S1 of the rubber layer 5. Then, the resin 3A is cooled and cured to be formed as the resin body 3. Thus, the laminated product 1 (shown in FIG. 1) in which the metal body 2 and the resin body 3 are joined together (integrally molded) with the adhesion layer 4 and the rubber layer 5 therebetween is obtained.

In the manufacturing method according to the present embodiment, the adhesion layer 4 and the rubber layer 5 are provided between the metal body 2 and the resin body 3, whereby a stress applied owing to thermal shrinkage or the like of the metal body 2 and the resin body 3 can be absorbed by both the adhesion layer 4 and the rubber layer 5. Consequently, the manufacturing method according to the present embodiment makes it possible to manufacture a laminated product 1 in which the joining strength between the metal body 2 and the resin body 3 is improved.

In the present embodiment, the resin 3A in liquid form is brought into contact with the rubber layer 5 and cured, whereby the rubber layer 5 can be elastically deformed so as to follow a significant thermal shrinkage of the resin body 3. Consequently, a stress applied between the metal body 2 and the resin body 3 is effectively absorbed, whereby the joining strength between the metal body 2 and the resin body 3 is improved.

In a case where the recess-projection portion (not shown) is formed onto the second surface S2 of the metal body 2 shown in FIG. 2(a) as in the present embodiment, the anchor effect with respect to the adhesion layer 4 is exhibited, whereby a laminated product 1 in which the adhesion strength between the metal body 2 and the adhesion layer 4 is further improved can be manufactured.

The first surface S1 of the rubber layer 5 shown in FIG. 3(a) is preferably halogenated before the resin 3A in liquid form (shown in FIG. 3(b)) is brought into contact with the rubber layer 5. Consequently, the adhesiveness between the rubber layer 5 and the resin body 3 is improved. Further, the first surface S1 in the present embodiment is directly joined to the resin body 3 with no adhesive layer therebetween, whereby the manufacturing process for the laminated product 1 can be simplified. Depending on the formula of the rubber layer 5, the first surface S1 may be joined to the resin body 3 with an adhesive layer (not shown) therebetween.

### [Airless Tire]

Next, an airless tire including the laminated product 1 will be described.

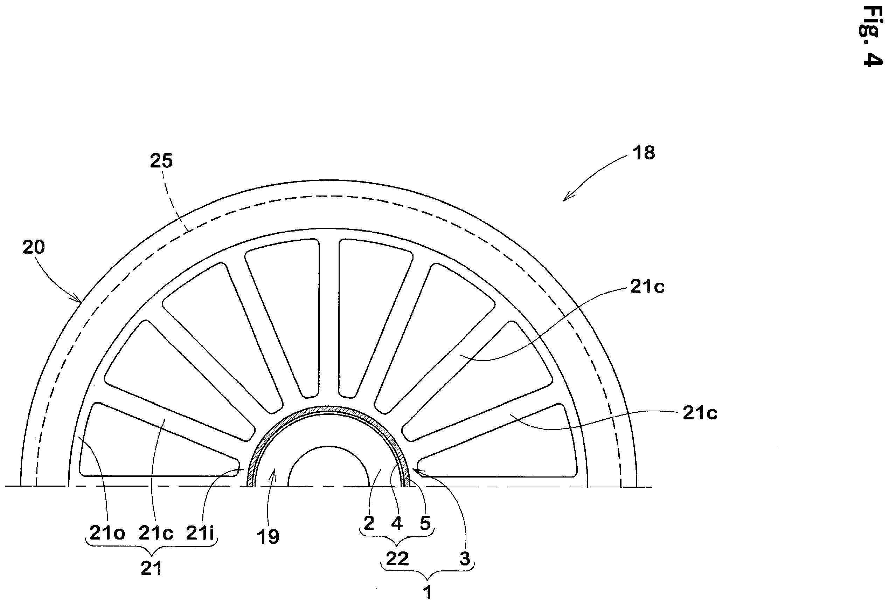

FIG. 4 is a partial front view of an airless tire 18 according to the present embodiment as seen in an axle direction. As shown in FIG. 4, the airless tire 18 includes: a hub portion 19 to be fixed to an axle; an annular tread ring 20 to be brought into contact with a ground; and a spoke portion 21 connecting the hub portion 19 and the tread ring 20 to each other.

The hub portion 19 is formed from, for example, a metal material.

The tread ring 20 is formed from a vulcanized rubber. The tread ring 20 may include, for example, a reinforcing cord layer 25 (indicated by a broken line) therein in order to increase the rigidity thereof in a circumferential direction or the like.

The spoke portion 21 in the present embodiment includes members such as: an outer portion 21o on an outer side in a tire radial direction; an inner portion 21i on an inner side in the tire radial direction; and a plurality of spoke elements 21c. These members are integrated with one other.

The outer portion 21o is an annular member joined to the inner circumferential surface of the tread ring 20. The inner portion 21i is an annular member joined to the outer circumferential surface of the hub portion 19. Each of the spoke elements 21c extends in the tire radial direction between the outer portion 21o and the inner portion 21i so as to establish connection therebetween.

In the present embodiment, the metal body 2 (shown in FIG. 1) of the laminated product 1 forms the hub portion 19, and the resin body 3 (shown in FIG. 1) of the laminated product 1 forms the spoke portion 21 (inner portion 21i). The adhesion layer 4 and the rubber layer 5 are provided between the hub portion 19 and the spoke portion 21. Thus, the laminated product 1 is used for the airless tire 18 according to the present embodiment.

In the laminated product 1, the joining performance between the metal body 2 (hub portion 19) and the resin body 3 (spoke portion 21) is improved by the adhesion layer 4 and the rubber layer 5. Further, the rubber layer 5 made from the vulcanized rubber can be elastically deformed between the metal body 2 (hub portion 19) and the resin body 3 (spoke portion 21). Consequently, in the airless tire 18, the joining strength between the hub portion 19 and the spoke portion 21 is increased, whereby the durability (high-speed durability) of the airless tire 18 is improved.

### [Manufacturing Method for Airless Tire]

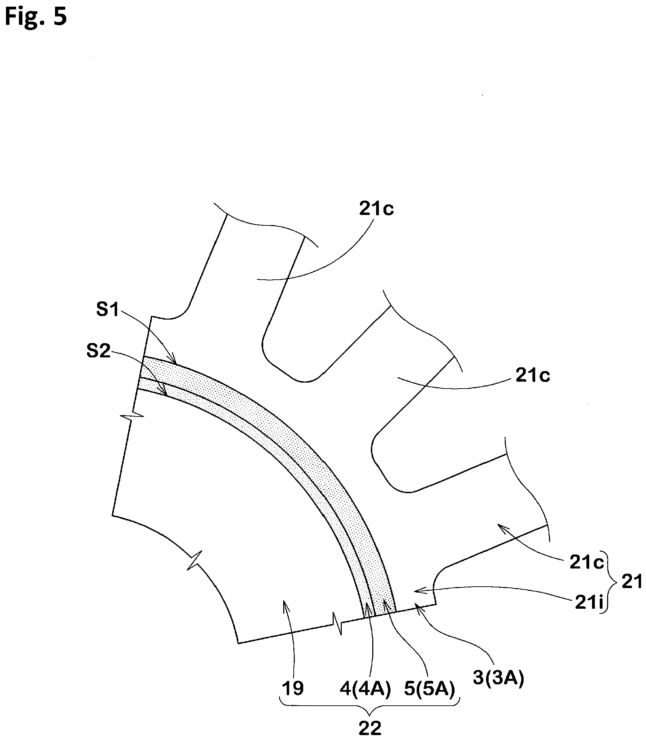

Next, a manufacturing method for the airless tire 18 according to the present embodiment (hereinafter, sometimes referred to as "manufacturing method") will be described. As the manufacturing method according to the present embodiment, a publicly known procedure described in a patent document (Japanese Laid-Open Patent Publication No. 2015-217717) or the like is employed, for example. Hereinafter, a procedure that is not publicly known will be mainly described, and a procedure that is publicly known may be omitted. FIG. 5 is a partial enlarged view of the airless tire 18 in FIG. 4.

### [Preparation of Hub Portion]

In the manufacturing method according to the present embodiment, a step of preparing the hub portion 19 (metal body 2) shown in FIG. 4 is performed first. For the hub portion 19, in a case where the recess-projection portion (not shown) is formed onto the second surface S2 (shown in FIG. 5) which is to be in contact with the adhesion layer 4, a step of forming the recess-projection portion onto the second surface S2 may be performed prior to the step of disposing the adhesive 4A and the unvulcanized rubber 5A. The recess-projection portion is formed according to the above procedure.

### [Vulcanize-Molding of Tread Ring]

Next, in the manufacturing method according to the present embodiment, a step of vulcanize-molding the annular tread ring 20 shown in FIG. 4 is performed. In this step, a surface-treated layer (not shown) is formed onto the inner circumferential surface of the tread ring 20. The surface-treated layer is formed through, for example, chlorination treatment.

### [Disposition of Adhesive and Unvulcanized Rubber]

Next, in the manufacturing method according to the present embodiment, a step of disposing, onto the second surface S2 which is a surface of the hub portion 19 and which is to be in contact with the adhesion layer 4 shown in FIG. 5, the adhesive 4A for forming the adhesion layer 4 and the unvulcanized rubber 5A for forming the rubber layer 5 is performed. Disposition of the adhesive 4A and the unvulcanized rubber 5A is performed according to the same procedure as that of the manufacturing method for the laminated product 1 shown in FIGS. 2(a) to 2(c).

### [Vulcanization of Unvulcanized Rubber to Form Rubber Layer]

Next, in the manufacturing method according to the present embodiment, a step of vulcanizing the unvulcanized rubber 5A to form the rubber layer 5 is performed. In the present embodiment, a mold (not shown) in which the hub portion 19, the adhesive 4A, and the unvulcanized rubber 5A have been disposed is heated. Consequently, the unvulcanized rubber 5A is vulcanized to be formed as the rubber layer 5. Further, the adhesive 4A is cured to be formed as the adhesion layer 4. The vulcanization temperature and the vulcanization time can be set to the same vulcanization temperature and vulcanization time as those in the manufacturing method for the laminated product 1. Consequently, an integral body 22 composed of the hub portion 19, the adhesion layer 4, and the rubber layer 5 is formed. The integral body 22 is taken out from the mold.

### [Disposition of Integral Body and Tread Ring into Mold]

Next, in the manufacturing method according to the present embodiment, a step of disposing the tread ring 20 and the integral body 22 composed of the hub portion 19 (metal body 2), the adhesion layer 4, and the rubber layer 5 shown in FIG. 4 into a cavity of a mold (neither of which is shown) is performed. After the integral body 22 and the tread ring 20 are disposed, an empty space (not shown) for molding the spoke portion 21 is formed in the cavity of the mold.

### [Curing of Resin in Liquid Form]

Next, in the manufacturing method according to the present embodiment, a step of bringing the resin 3A in liquid form (shown in FIG. 5) for forming the spoke portion 21 (resin body 3) into contact with the rubber layer 5 and curing the resin 3A to form the spoke portion 21 is performed. The resin 3A is melted into liquid form according to the same procedure as that of the manufacturing method for the laminated product 1.

Next, in the present embodiment, the resin 3A in liquid form is supplied from the cylinder (not shown) of the injection molding machine into the empty space of the cavity of the mold (none of which is shown). Consequently, the resin 3A in liquid form is brought into contact with the first surface S1, of the rubber layer 5, which is to be in contact with the resin 3A. Then, the resin 3A is cooled and cured to be formed as the resin body 3. Thus, the airless tire 18 (shown in FIG. 4) is obtained. In the airless tire 18, the tread ring 20 has been integrated with the laminated product 1 in which the hub portion 19 and the spoke portion 21 are joined together (integrally molded) with the adhesion layer 4 and the rubber layer 5 therebetween.

In the manufacturing method according to the present embodiment, the adhesion layer 4 and the rubber layer 5 are provided between the hub portion 19 and the spoke portion 21, whereby a stress applied owing to thermal shrinkage or the like of the hub portion 19 and the spoke portion 21 can be effectively absorbed by both the adhesion layer 4 and the rubber layer 5. Consequently, the manufacturing method according to the present embodiment makes it possible to manufacture an airless tire 18 in which the joining strength between the hub portion 19 and the spoke portion 21 is improved.

In the present embodiment, the resin 3A in liquid form is brought into contact with the rubber layer 5 and cured, whereby the rubber layer 5 can be elastically deformed so as to follow a significant thermal shrinkage of the resin body 3. Consequently, a stress applied between the hub portion 19 and the spoke portion 21 is effectively absorbed, whereby the joining strength between the hub portion 19 and the spoke portion 21 is improved.

In a case where the recess-projection portion (not shown) is formed onto the second surface S2 of the hub portion 19 shown in FIG. 5 as in the present embodiment, the anchor effect with respect to the adhesion layer 4 is exhibited, whereby an airless tire 18 in which the adhesion strength between the hub portion 19 and the spoke portion 21 is further improved can be manufactured.

The first surface S1 of the rubber layer 5 shown in FIG. 5 is preferably halogenated before the resin 3A in liquid form is brought into contact with the rubber layer 5. Consequently, the adhesiveness between the rubber layer 5 and the spoke portion 21 is improved. Further, the first surface S1 is directly joined to the spoke portion 21 with no adhesive layer therebetween, whereby the manufacturing process for the airless tire 18 can be simplified.

Although the particularly preferred embodiment of the present invention has been described in detail above, the present invention is not limited to the embodiment shown, and various modifications can be made to implement the present invention.

### EXAMPLES

More specific and non-limiting examples of the present invention will be described below.

As shown in FIG. 2(a), samples of metal bodies each having a second surface with a recess-projection portion formed thereon were prepared (examples 1 to 3). An adhesive for forming an adhesion layer was applied onto the second surface of each of the samples of the metal bodies. As shown in FIG. 2(b), the sample of the metal body was put into a cavity of a mold. As shown in FIG. 2(c), an unvulcanized rubber for forming a rubber layer was supplied into an empty space of the cavity. Then, the unvulcanized rubber was vulcanized to be formed as a rubber layer, whereby an integral body composed of the metal body, the adhesion layer, and the rubber layer was formed. The vulcanization temperature was set to 170°C, and the vulcanization time was set to 12 minutes. The thickness W1 of the rubber layer was set to 1.0 mm. The thickness W2 of the adhesion layer was set to 0.045 mm.

Next, the above integral body was put into a cavity of another mold shown in FIG. 3(a), and then a resin in liquid form for forming a resin body was supplied into an empty space of the cavity. Consequently, the resin in liquid form was brought into contact with the first surface of the rubber layer. Then, the resin in liquid form was cooled and cured to be formed as a resin body. Consequently, a laminated product in which the metal body and the resin body were joined together with the adhesion layer and the rubber layer therebetween was formed.

As indicated in Table 1, the adhesion layer in each of examples 1 to 3 was formed from a chlorinated rubber-based adhesive containing chlorinated rubber as a main component. Meanwhile, the adhesion layer in a comparative example was formed from a urethane-based adhesive containing urethane as a main component.

In addition, in each of examples 1 to 3, the first surface of the rubber layer was halogenated before the resin in liquid form was brought into contact with the rubber layer. Further, in example 3, an adhesive layer was provided on the first surface of the rubber layer.

From each of the laminated products in examples 1 to 3, a strip-shaped sample having a width of 25 mm and a length of 12 mm was cut out as a sample of the laminated product. Specifications common to the examples are as follows.
Metal body: aluminum alloy
Ten-point average roughness Rz of recess-projection portion: 614 µm

For comparison, a laminated product including no rubber layer between the resin body and the adhesion layer was formed (comparative example). The laminated product in the comparative example was formed through the same process as those in examples 1 to 3 except that the step of forming the rubber layer was not performed.

Tensile shear adhesion strength tests (peeling tests) were conducted in order to evaluate the joining strength between the metal body and the resin body of each of the laminated products. The tensile shear adhesion strength tests were conducted according to JIS K 6850 in each of a room-temperature environment (at 23°C and at a humidity of 55%) and a high-temperature environment (at 80°C and at a humidity of 55%).

The results of the tests are indicated in Table 1.

**[Table 1]**

| | | | | | Unit (parts by weight) | |
|---|---|---|---|---|---|---|
| | | | Example 1 | Example 2 | Example 3 | Comparative example |
| Rubber layer (vulcanized rubber) | Rubber formula | Natural rubber | 80 | 80 | 80 | - |
| | | SBR | 20 | 20 | 20 | - |
| | | Phenol-based tackifier | 1.5 | - | 1.5 | - |
| | | Petroleum-based tackifier | 1.5 | - | 1.5 | - |
| | | Sulfur | 3 | 3 | 3 | - |
| | | Vulcanization accelerator | 3.6 | 3.6 | 3.6 | - |
| | | Stearic acid | 1.5 | 1.5 | 1.5 | - |
| Halogenation (rubber surface treatment agent) | | Trichloroisocyanuric acid | Present | Present | Present | - |
| Adhesion layer | | Chlorinated rubber-based adhesive | Used | Used | Used | - |
| | | Urethane-based adhesive | - | - | - | Used |
| Presence/absence of adhesive layer on first surface | | Urethane-based adhesive | Absent | Absent | Present | - |
| Test results | | Complex elastic modulus E* of rubber layer (MPa) | 10 | 8 | 10 | - |
| | | Peeling test (room temperature) | Material breakage | Material breakage | Material breakage | Peeling at interface |
| | | Peeling test (80°C) | Material breakage | Material breakage | Peeling at interface | Peeling at interface |
| | | Drum test (index) | 100 | 100 | 90 | 21 |

According to the results of the tests, each of the laminated products in examples 1 to 3 was such that, in the room-temperature environment, the resin body experienced material breakage, and peeling occurred at none of the interface between the metal body and the adhesion layer, the interface between the adhesion layer and the rubber layer, and the interface between the rubber layer and the resin body. This is considered to be because, in each of the laminated products in examples 1 to 3, a stress due to thermal shrinkage or the like of the metal body and the resin body was absorbed by both the rubber layer and the adhesion layer, whereby the joining strength between the metal body and the resin body was improved.

Each of the laminated products in examples 1 and 2 was such that, in the high-temperature environment, the resin body experienced material breakage, and peeling occurred at none of the interface between the metal body and the adhesion layer, the interface between the adhesion layer and the rubber layer, and the interface between the rubber layer and the resin body. Meanwhile, the laminated product in example 3 was such that, in the high-temperature environment, peeling occurred at the interface between the rubber layer and the resin body.
This is considered to be because the heat resistance of the rubber layer was higher than the heat resistance of the adhesive, and thus the laminated product in each of examples 1 and 2 in which the first surface was directly joined to the resin body with no adhesive layer therebetween had a higher joining strength in the high-temperature environment than the laminated product in example 3 in which the first surface was joined to the resin body with the adhesive layer therebetween.

In each of examples 1 to 3, the chlorinated rubber-based adhesive was used for forming the adhesion layer, whereby the adhesiveness to the metal body was favorably improved. Further, in each of examples 1 to 3, the first surface of the rubber layer was halogenated, whereby the adhesiveness between the rubber layer and the resin body was improved. In addition, in example 1 with the rubber layer containing the tackifiers, the complex elastic modulus E* was higher, and furthermore, the adhesiveness to the resin body was more favorably improved than in example 2 with the rubber layer containing no tackifiers.

Meanwhile, the laminated product in the comparative example was such that, in both the room-temperature environment and the high-temperature environment, peeling occurred at the interface between the metal body and the adhesion layer or the interface between the adhesion layer and the resin body.

Next, airless tires were produced as samples from the laminated products in Table 1, and the high-speed durability of each of the airless tires was evaluated. The high-speed durability was evaluated as follows. That is, by using a drum tester, a load of 2.6 kN was applied to the airless tire, and, from start of rolling at an initial speed of 100 km/h, the speed was increased by 10 km/h each time of elapse of 10 minutes. Then, a speed lower by one step than (a speed obtained by subtracting 10 km/h from) the speed at which the airless tire sustained damage is indicated as an index with the result of example 1 being regarded as 100. A larger numerical value indicates a better high-speed durability.

According to the results of the tests, in each of examples 1 to 3, the joining performance between the metal body and the resin body was able to be improved, and a high-speed durability required of the airless tire was able to be exhibited. Further, in each of examples 1 to 3, the chlorinated rubber-based adhesive was used for forming the adhesion layer, whereby the adhesiveness to the metal body was improved, and the high-speed durability was favorably improved. Further, in each of examples 1 to 3, the first surface of the rubber layer was halogenated, whereby the high-speed durability was favorably improved. In addition, in example 1 with the rubber layer containing the tackifiers, the complex elastic modulus E* was higher and the high-speed durability was more favorably improved than in example 2 with the rubber layer containing no tackifiers. Further, in each of examples 1 and 2, the first surface was directly joined to the resin body with no adhesive layer therebetween, whereby the high-speed durability was higher than in example 3 in which the first surface was joined to the resin body with the adhesive layer therebetween.

### [Additional Notes]

The present invention includes the following aspects.

### [Present Invention 1]

A laminated product comprising a metal body, a resin body, and an adhesion layer, the metal body and the resin body being joined together with the adhesion layer therebetween, wherein
the laminated product further comprises a rubber layer made from a vulcanized rubber and located between the resin body and the adhesion layer.

### [Present Invention 2]

The laminated product according to present invention 1, wherein the rubber layer contains at least one of natural rubber, butadiene rubber, and styrene-butadiene rubber.

### [Present Invention 3]

The laminated product according to present invention 1 or 2, wherein the rubber layer contains a tackifier.

### [Present Invention 4]

The laminated product according to any one of present inventions 1 to 3, wherein
the rubber layer has a first surface in contact with the resin body, and
the first surface is halogenated.

### [Present Invention 5]

The laminated product according to present invention 4, wherein the first surface is directly joined to the resin body with no adhesive layer therebetween.

### [Present Invention 6]

The laminated product according to any one of present inventions 1 to 5, wherein a complex elastic modulus at 70°C of the rubber layer is 3 to 50 MPa.

### [Present Invention 7]

The laminated product according to any one of present inventions 1 to 6, wherein a thickness of the rubber layer is 1 to 5 mm.

### [Present Invention 8]

The laminated product according to any one of present inventions 1 to 7, wherein a thickness of the adhesion layer is 10 to 50 µm.

### [Present Invention 9]

The laminated product according to any one of present inventions 1 to 8, wherein the adhesion layer is formed so as to contain chlorinated rubber or chlorosulfonated polyethylene as a main component.

### [Present Invention 10]

The laminated product according to any one of present inventions 1 to 9, wherein a tensile shear strength at 23°C between the metal body and the resin body is not lower than 1.0 MPa.

### [Present Invention 11]

The laminated product according to any one of present inventions 1 to 10, wherein the resin body contains a thermoplastic elastomer.

### [Present Invention 12]

The laminated product according to present invention 11, wherein the thermoplastic elastomer is a thermoplastic polyester elastomer, a thermoplastic polyamide elastomer, or a thermoplastic polyurethane elastomer.

### [Present Invention 13]

An airless tire comprising the laminated product according to any one of present inventions 1 to 12.

### [Present Invention 14]

A manufacturing method for the laminated product according to any one of present inventions 1 to 12, the manufacturing method comprising:
a step of disposing, onto a second surface which is a surface of the metal body and which is to be in contact with the adhesion layer, an adhesive for forming the adhesion layer and an unvulcanized rubber for forming the rubber layer;
a step of vulcanizing the unvulcanized rubber to form the rubber layer; and
a step of bringing a resin in liquid form into contact with the rubber layer and curing the resin to form the resin body.

### [Present Invention 15]

The manufacturing method for the laminated product, according to present invention 14, the manufacturing method further comprising a step of forming a recess-projection portion onto the second surface prior to the step of disposing the adhesive and the unvulcanized rubber.

## Claims

1. A laminated product (1) comprising a metal body (2), a resin body (3), and an adhesion layer (4), the metal body (2) and the resin body (3) being joined together with the adhesion layer (4) therebetween, wherein
the laminated product (1) further comprises a rubber layer (5) made from a vulcanized rubber and located between the resin body (3) and the adhesion layer (4).

2. The laminated product (1) according to claim 1, wherein the rubber layer (5) contains at least one of natural rubber, butadiene rubber, and styrene-butadiene rubber.

3. The laminated product (1) according to claim 1 or 2, wherein the rubber layer (5) contains a tackifier.

4. The laminated product (1) according to any one of claims 1 to 3, wherein
the rubber layer (5) has a first surface (S1) in contact with the resin body (3), and
the first surface (S1) is halogenated.

5. The laminated product (1) according to claim 4, wherein the first surface (S1) is directly joined to the resin body (3) with no adhesive layer therebetween.

6. The laminated product (1) according to any one of claims 1 to 5, wherein a complex elastic modulus (E*) at 70°C of the rubber layer (5) is 3 to 50 MPa.

7. The laminated product (1) according to any one of claims 1 to 6, wherein a thickness (W1) of the rubber layer (5) is 1 to 5 mm.

8. The laminated product (1) according to any one of claims 1 to 7, wherein a thickness (W2) of the adhesion layer (4) is 10 to 50 µm.

9. The laminated product (1) according to any one of claims 1 to 8, wherein the adhesion layer (4) is formed so as to contain chlorinated rubber or chlorosulfonated polyethylene as a main component.

10. The laminated product (1) according to any one of claims 1 to 9, wherein a tensile shear strength at 23°C between the metal body (2) and the resin body (3) is not lower than 1.0 MPa.

11. The laminated product (1) according to any one of claims 1 to 10, wherein the resin body (3) contains a thermoplastic elastomer.

12. The laminated product (1) according to claim 11, wherein the thermoplastic elastomer is a thermoplastic polyester elastomer, a thermoplastic polyamide elastomer, or a thermoplastic polyurethane elastomer.

13. An airless tire (18) comprising the laminated product (1) according to any one of claims 1 to 12.

14. A manufacturing method for the laminated product (1) according to any one of claims 1 to 12, the manufacturing method comprising:
a step of disposing, onto a second surface (S2) which is a surface of the metal body (2) and which is to be in contact with the adhesion layer (4), an adhesive (4A) for forming the adhesion layer (4) and an unvulcanized rubber (5A) for forming the rubber layer (5);
a step of vulcanizing the unvulcanized rubber (5A) to form the rubber layer (5); and
a step of bringing a resin (3A) in liquid form into contact with the rubber layer (5) and curing the resin (3A) to form the resin body (3).

15. The manufacturing method for the laminated product (1), according to claim 14, the manufacturing method further comprising a step of forming a recess-projection portion onto the second surface (S2) prior to the step of disposing the adhesive (4A) and the unvulcanized rubber (5A).
